Europäisches Patentamt

(19) European Patent Office

Office européen des brevets

(11) **EP 0 707 420 A1**

(12) **EUROPEAN PATENT APPLICATION**

(43) Date of publication:
17.04.1996 Bulletin 1996/16

(51) Int. Cl.$^6$: **H04N 5/262**

(21) Application number: 95306533.1

(22) Date of filing: 15.09.1995

(84) Designated Contracting States:
DE FR GB

(30) Priority: 15.09.1994 US 306832

(71) Applicant: **AVESCO PLC**
**Chessington, Surrey KT9 1TT (GB)**

(72) Inventors:
• **Parker, James Stuart**
**Curming, Georgia 30131 (US)**

• **Smith, John Richard**
**Buford, Georgia 30518 (US)**

(74) Representative: **Lloyd, Patrick Alexander**
**Desmond**
**Reddie & Grose**
**16 Theobalds Road**
**London WC1X 8PL (GB)**

(54) **3D special effects system**

(57)    A video special effects system for warping a flat input image by mapping it onto a curved surface in which the user defines a curved surface by specifying a number of points on the surface. A number of points in the address map of the input image are transformed onto the address map of the output image. These points on the output address map are then used to generate coefficients for portions of the output address map defining points on the input address map as a function of the points on the output address map within each portion of the output address map.

FIG. 3

## Description

### Background of the Invention

The present invention relates to a 3D (three-dimensional) video special effects system.

A popular video special effect is curvilinear warping which involves the warping of a flat input video image by mapping it onto a curved surface.

The techniques for displaying representations of curved surfaces and solids were originally developed in the field of interactive computer graphics. These are discussed in "Fundamentals of Interactive Computer Graphics" by J.D. Foley and A. Van Dam, Addison-Wesley Publishing Company, Reading, Massachusetts, U.S.A., March 1983. These techniques have found many useful applications in a variety of fields such as architectural rendering and mechanical design. In the field of video production, it is desirable to use these 3D graphical techniques to create video special effects which add interest or result in more effective communication, to a video presentation.

According to Foley and Van Dam, the three most common representations for 3D surfaces are polygon meshes, parametric bicubic patches and quadratic surfaces. All three of these systems represent a 3D surface or object as a collection of patches or surfaces each representing or approximating a portion of the surface of the 3D object. The three methods differ in the form of patches or surfaces used to make up the representation.

A polygon mesh is a set of polygonally bounded planar surfaces. Parametric bicubic patches are a set of curved surfaces, each curved surface or patch being defined by three parametric cubic equations, one for each of the x, y and z co-ordinates of points on the patch surface. The third order (ie cubic) patch equations mean that many fewer bicubic patches than polygonal planar patches are needed to represent a curved surface to a given accuracy. The equations for a bicubic patch are of the form:

$$x = f(u,v) = a_{11}u^3v^3 + a_{12}u^3v^2 + a_{13}u^3v + a_{14}u^3 + a_{21}u^2v^3 + a_{22}u^2v^2 + a_{23}u^2v + a_{24}u^2$$
$$+ a_{31}uv^3 + a_{32}uv^2 + a_{33}uv + a_{34}u + a_{41}v^3 + a_{42}v^2 + a_{43}v + a_{44}$$

$$y = f(u,v) = b_{11}u^3v^3 + b_{12}u^3v^2 + b_{13}u^3v + b_{14}u^3 + b_{21}u^2v^3 + b_{22}u^2v^2 + b_{23}u^2v + b_{24}u^2$$
$$+ b_{31}uv^3 + b_{32}uv^2 + b_{33}uv + b_{34}u + b_{41}v^3 + b_{42}v^2 + b_{43}v + b_{44}$$

$$z = f(u,v) = c_{11}u^3v^3 + c_{12}u^3v^2 + c_{13}u^3v + c_{14}u^3 + c_{21}u^2v^3 + c_{22}u^2v^2 + c_{23}u^2v + c_{24}u^2$$
$$+ c_{31}uv^3 + c_{32}uv^2 + c_{33}uv + c_{34}u + c_{41}v^3 + c_{42}v^2 + c_{43}v + c_{44}$$

where $a_{11}$ to $a_{44}$ are polynomial coefficients. The y and z co-ordinates of a given point on the surface are given by equations of a similar form.

Quadratic surfaces have the analytical form:

$$a_1x^2 + a_2y^2 + a_3z^2 + a_4xy + a_5yz + a_6zx + a_7x + a_8y + a_9z + a_{10} = 0$$

Video effects applications differ from the computer graphics applications discussed by Foley and Van Dam in two fundamental ways. Firstly, in video effects applications, one is mapping a real time video image onto a curved surface rather than creating a graphical representation of an object or scene. Secondly, in most video effects applications, the 3D image mapping system must be capable of real time operation and display. This is not generally necessary for computer graphics applications.

In video special effects it is necessary to transform all the points on the input image (ie source address map) that have an equivalent point on the warped output image (ie target address map) within a single field, that is, within about 16 ms. The very large amount of processing required to calculate the transformation relationship between points in the input and output address spaces has meant that it has not been possible to create and render special effects in real time under user control.

Known video effects systems have a number of preset video special effects for which the processing has been previously carried out and the relationship between the input and output addresses pre-defined. Such special effects systems have specialised hardware or software which is programmed with the source/target relationship for a selection of pre-defined special effects.

Known video special effects systems for curvilinear warping can be characterised as being either "write side" or "read side" systems. A write side device takes the input video data and the warping addresses and stores the warped video data in memory. A read side device stores the video data unchanged in a memory and retrieves the source points corresponding to a particular target point on the warped address map from the unchanged video data in the memory.

A disadvantage of write side special effects systems is that if the scale of the output image information is increased in relation to the scale of the input image information, then it is possible for holes to appear in the output picture. This occurs because as the scale of the curved surface function increases, the corresponding input addresses do not have a great enough resolution to provide input (ie source) addresses corresponding to all the output (ie target) addresses, thus some of the output addresses are skipped and remain unwritten.

An alternative and parallel characterisation of special effects systems is as "forward addressing" or "reverse addressing" systems. In forward addressing the output image is generated by directly transforming the source input image into the target image and inputting the modified video data into the system memory. A disadvantage of forward addressing is that the original source video data is not stored and it is not possible to interpolate between source pixels to accurately determine the status of target pixels which are not mapped from integer source pixels. In reverse addressing the output image is determined by taking the equations that transform the input address map to the output address map and inverting them to determine the equations that transform points on the output address map to their equivalent points in the input address map. However, the mathematics involved in inverting the transformation matrices corresponding to even the most simple of curved surfaces are extremely complex and require considerable processing power making this method unable to perform video special effects in real-time. Furthermore, for anything but the simplest curved surfaces it is not possible to invert the transformation matrices. Known reverse addressing systems are therefore highly restricted in their scope of possible special effects.

## Summary of the Invention

The present invention relates to an apparatus for generating three dimensional video effects in which an input video signal representative of an input image is manipulated to produce an output video signal representative of the input image mapped onto a three dimensional surface, comprising:

means for defining the three dimensional surface;

means for dividing the address map defining the input video signal into a plurality of blocks and for transforming the vertices of each block in accordance with the defined surface to provide a series of target blocks;

means for defining and storing the relationship between pixel points in each target block and the input signal address map;

means for scanning each pixel of each target block and generating a corresponding source address;

means for mapping said input image onto said defined three dimensional surface.

The video special effects system of the present invention allows the real-time creation and rendering of video special effects freely defined by the user. The system of the invention achieves this as a reasonable cost whilst maintaining a good quality video image.

## Brief Description of the Drawings

An embodiment of the invention will now be described, by way of example only and with reference to the accompanying figures, in which:-

Figure 1 shows the arrangement of 16 control points used to define the shape of the bicubic patch used to represent the 3D output surface in accordance with an embodiment of the invention;

Figure 2 shows how one of the control points may be moved by the user to create a desired surface;

Figure 3 is a block diagram illustrating the main functional blocks of a 3D video effects system embodying the present invention;

Figure 4 is a flow diagram illustrating the processing carried out by the control panel subsystem of figure 3;

Figure 5 is a flow diagram illustrating the processing carried out by the CPU subsystem of Figure 3;

Figure 6 is a block diagram illustrating the functional blocks of the control panel subsystem of figure 3;

Figure 7 is a block diagram illustrating the functional blocks of the CPU subsystem of figure 3;

Figure 8 is a block diagram illustrating the functional blocks of the address generator subsystem of figure 5;

Figure 9 is a block diagram illustrating in more detail the coefficient pre-processor and dual port memory of figure 8;

Figure 10 is a block diagram showing, in more detail, the address processor and second dual port memory of the address generator subsystem of figure 8;

Figure 11 is a flow diagram illustrating the processing carried out by the coefficient pre-processor of Figure 9; and

Figure 12 is a block diagram showing the functional blocks of the video processor subsystem.

**Description of Preferred Embodiment**

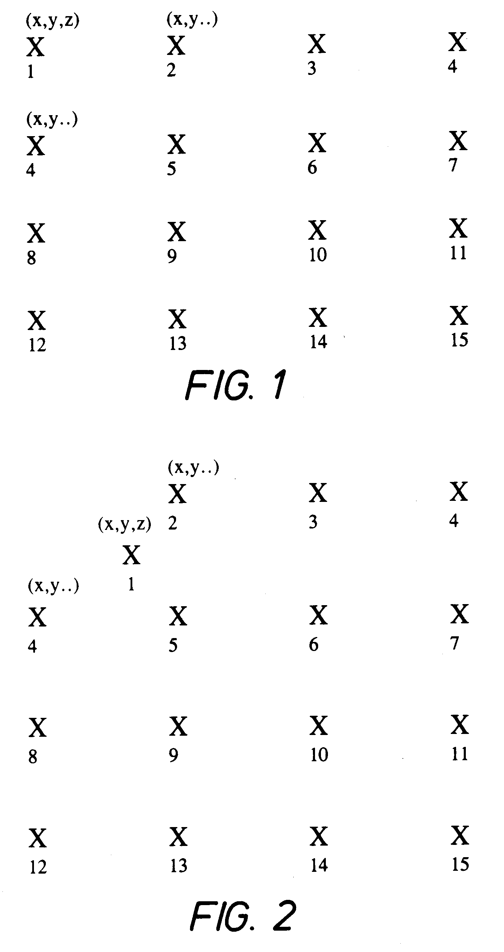

The overall function of the effects system is to receive an input signal representing a video image, and to manipulate the input signal to produce an output signal which is a representation of the input image mapped onto a user defined 3D surface. The tasks required to accomplish this function are divided among four major subsystems. Referring to figure 1, these subsystems are the control panel subsystem 10, the central processing unit (CPU) subsystem 20, the address generator subsystem 30, and the video processor subsystem 40. To produce an effect, the control panel subsystem 10 receives control data from the system's user as he creates or specifies a particular 3D surface from user control section 50 and passes the data to the CPU subsystem 20 for further processing. The CPU subsystem processes the control data to produce mathematical coefficients which define the shape of the warped surface created by the user. These coefficients are passed to the address generator subsystem 30. The address generator subsystem further processes the coefficients to produce an address map of the warped surface. This address map is transferred to the video processor subsystem where it is used to map the input video signal onto the warped surface.

Considering the four major subsystems in greater detail.

Referring to figures 1 and 2, the main function of the control panel subsystem 10 is to receive user control information and to convert this information to a format which is usable by the central processing unit (CPU) subsystem.

The user defines the shape of the 3D surface onto which the input image is to be mapped. The 3D output surface is represented by a single patch of a parametric bicubic surface and the shape of the bicubic patch is defined by the user. The shape of the patch is controlled by a set of 16 control points as shown in figure 1. The number of control points can be varied. 16 control points have been chosen for the preferred embodiment as they allow one a large amount of freedom in defining the 3D surface whilst keeping the necessary processing to manageable proportions. The embodiment described uses a single patch but more than one may be used if desired.

Each of the 16 control points defines a specific position in 3D space for the corresponding point on the image surface. The control points are defined in terms of 3 numeric parameters (x, y and z) with the x value representing horizontal position, the y value representing vertical position, and the z value representing depth. The user can easily manipulate an image to create a desired warp effect by using the control panel subsystem's input controls to change the location of one or more of the 16 control points in 3D space. An example of this is shown in figure 2 in which the top left control point has been moved in the X and Y directions. When the control points are moved by the user, the effects system receives the updated control point positions, calculates the 3D bicubic surface as defined by the control points, and then maps the input video image onto the calculated surface. The control panel subsystem also allows the user to enter data for defining a variety of additional control parameters similar to those found in most digital video effects systems. These additional parameters which include 3D location, 3D rotation and scale factor allow the user to relocate, rotate or scale the warped image while still maintaining its specified 3D shape. These parameters may be used to manipulate a flat image as well. The various control parameters entered by the user are formatted by the control panel subsystem and passed to the CPU subsystem for further processing.

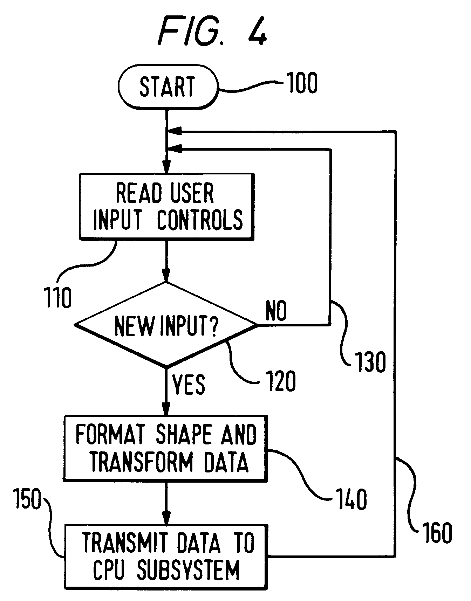

The control panel subsystem consists of a set of user controls (such as push buttons, knobs, etc.), a data processor to receive and format the information from the user controls, a graphical display device to provide control and status information to the user, and a communications port which is used to transfer formatted data between the control panel subsystem and the CPU subsystem. The steps executed by the control panel subsystem are shown in the flow chart of figure 4. The routine starts at step 100 whereupon the user defined input controls are read at step 110. These controls will include the x,y, and z coordinate data of the 16 patch points as well as relocation, rotate and scale information as well as other parameters common in video processing systems. At step 120 the subroutine determines whether the input information has changed. If it has not then no further information is required and the routine loops back to the beginning at 130. If the information has changed then the input shape and transform data is formatted at step 140 and then transmitted to the CPU subsystem at step 150 whereupon the subroutine returns to the beginning at 160.

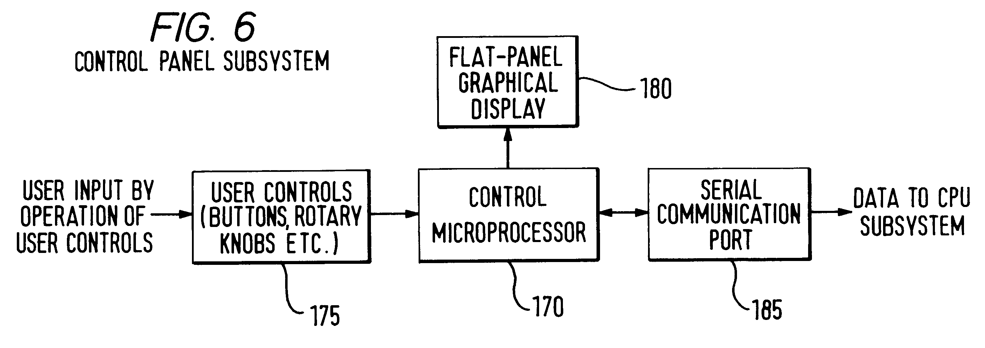

Referring to figure 6, the control panel subsystem comprises a control microprocessor 170 which executes the routine of figure 4. The microprocessor monitors the user controls 175 which comprise an array of buttons, knobs, joystick controls and other input devices which are used to enter numeric and non-numeric control data as is well known in the art. The user operates these controls to generate data about a shape to be created. The microprocessor is typically a 80386 device manufactured by Intel Corp together with memory and other standard peripheral functions. Although other devices are suitable. The microprocessor is also connected to a display device 180 such as a flat panel graphical display which enable the 16 control points to be displayed. The user can operate the controls with reference to this display to ensure that the points are moved as desired. The display can also show coordinate data for each point as well as other selected parameters such as the degree of rotation etc selected by the user and other status and control information. The preferred display is a monochrome VGA format display but other display devices such as a CRT display could be used.

The control microprocessor 170 is also connected to a serial communications port 180 which allows data to be sent to and from the CPU subsystem and in particular the formatted data produced by the micro processor.. The serial port preferred is a standard RS422 serial port which operates under the control of the microprocessor.

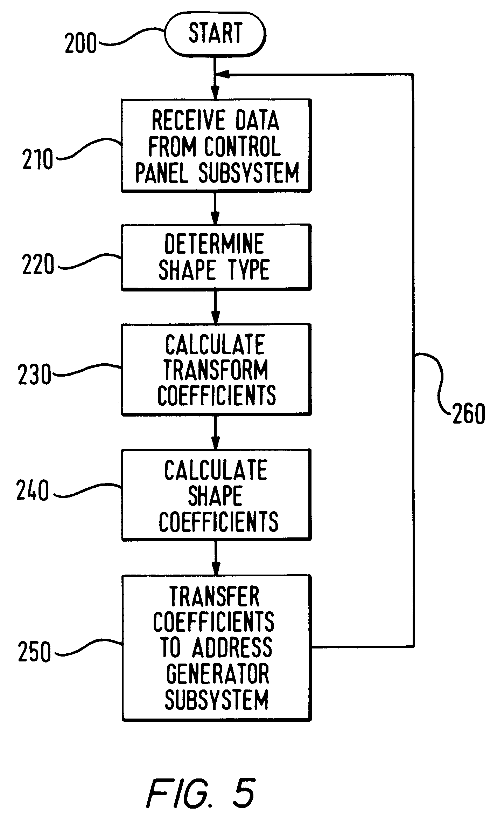

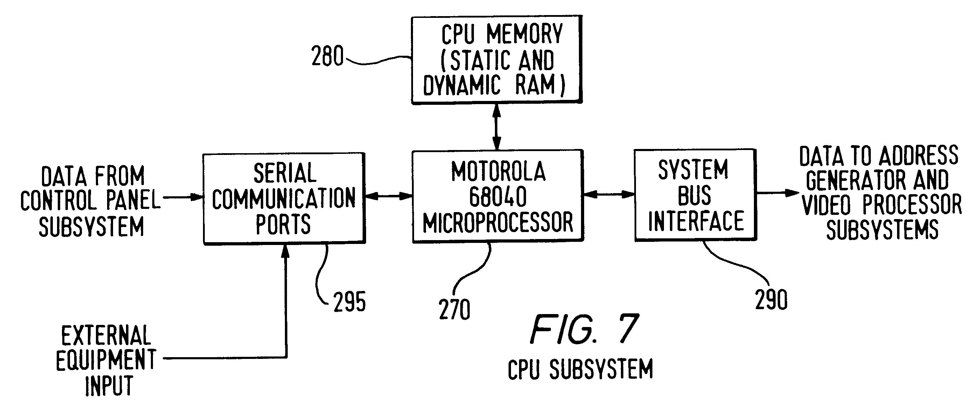

Referring to figures 5 and 7, the main function of the CPU subsystem is to provide centralised processing and control for the various functions of the video effects system. The CPU subsystem receives the formatted user input parameters from the control panel subsystem 50 and uses this information to control the address generator and the video processor.

To control the address generator, the CPU subsystem uses the information received from the control panel subsystem to compute two types of coefficients. The first type of coefficients ("warp" or "polynomial" coefficients) are a set of bicubic polynomial equation coefficients i.e. the a, b and c coefficients of the above equations which define the bicubic surface created by the user. These coefficients are calculated from the position values of the 16 control points as entered by the user. This is a well known procedure and is described in chapter 13 of "Fundamentals of Interactive Computer Graphics".

The parametric equations representing the surface defined by the user are of the form:

$$x = f(u,v) = a_{11}u^3v^3 + a_{12}u^3v^2 + a_{13}u^3v + a_{14}u^3 + a_{21}u^2v^3 + a_{22}u^2v^2 + a_{23}u^2v + a_{24}u^2$$
$$+ a_{31}uv^3 + a_{32}uv^2 + a_{33}uv + a_{34}u + a_{41}v^3 + a_{42}v^2 + a_{43}v + a_{44}$$

$$y = f(u,v) = b_{11}u^3v^3 + b_{12}u^3v^2 + b_{13}u^3v + b_{14}u^3 + b_{21}u^2v^3 + b_{22}u^2v^2 + b_{23}u^2v + b_{24}u^2$$
$$+ b_{31}uv^3 + b_{32}uv^2 + b_{33}uv + b_{34}u + b_{41}v^3 + b_{42}v^2 + b_{43}v + b_{44}$$

$$z = f(u,v) = c_{11}u^3v^3 + c_{12}u^3v^2 + c_{13}u^3v + c_{14}u^3 + c_{21}u^2v^3 + c_{22}u^2v^2 + c_{23}u^2v + c_{24}u^2$$
$$+ c_{31}uv^3 + c_{32}uv^2 + c_{33}uv + c_{34}u + c_{41}v^3 + c_{42}v^2 + c_{43}v + c_{44}$$

where u and v are the 2D co-ordinates of the flat input image and x, y and z are the 3D co-ordinates of the warped surface.

The second type of coefficients ("transformation coefficients") computed in the CPU subsystem are a set of transform coefficients which define parameters such as the location, rotation, skew and scale factor of the image. These coefficients are also based on user input data received from the control panel subsystem and are used to transform the bicubic surface in the address generator so that the final output image can be located, rotated or scaled in 3D space as desired by the user. As with most digital video effects systems, the user can create effects which vary over time by specifying the effects system parameters at two or more points within the effect. These points (often referred to as key frame points) define the desired appearance of the output image at specific frames within the effect. When the effect is run, the CPU subsystem computes the effects system parameters for each video field in real time to provide smooth transformation and motion of the image between the key frame points.

An additional function of the CPU subsystem is to provide control information to the video processor subsystem. This information, which is also based on user input data, is used to control parameters such as video source routing, filtering, image cropping, colour border and defocus.

Referring now to figure 5 in detail the CPU routine starts at step 200. At step 210 data is received from the control panel subsystem. At step 220 the shape type is determined and at steps 230 and 240 the transform and shape coefficients are calculated in the manner just described. The transform and shape coefficients are then transferred to the address generator subsystem at step 250 and the routine loops back to the beginning at 260.

Referring especially to figure 7, the CPU subsystem consists of a high speed microprocessor 270 such as a Motorola 68040 microprocessor, CPU memory 280 consisting of dynamic and static RAM, a system bus interface 290 and one or more communications ports 295. The serial ports are typically standard RS422 ports which receive data from the control panel subsystem and can also receive data from other external equipment such as an edit control system. The microprocessor is used to execute system software and to perform the calculations as described above. The CPU memory 280 is used for program and data storage. The system bus interface 290 is used for communication with the address generator and video processor subsystems. The system bus is typically a 16 bit communications bus with the CPU subsystem function as the bus master and all other subsystems functioning as bus slaves. The communications ports are used for communications with the control panel subsystem and other external equipment such as video edit controllers.

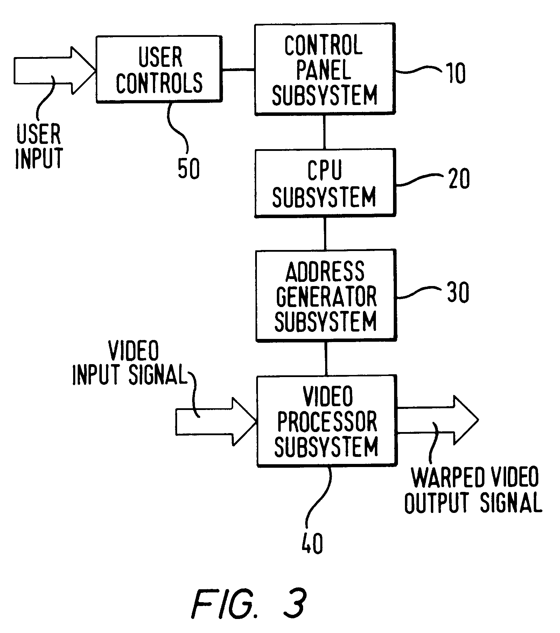

The warp and transformation coefficients computed by the CPU subsystem are then passed to the address generator subsystem 30 for further processing (see figure 3). The address generator subsystem computes a set of video mapping addresses which are used by the video processor to map the input video image onto the user defined surface represented by the parametric bicubic patch having equations of the form:

$$x = f(u,v)$$

$$y = f(u,v)$$

$$z = f(u,v)$$

The video mapping addresses are in the form of pairs of corresponding source (ie input) image and target (ie output) image addresses.

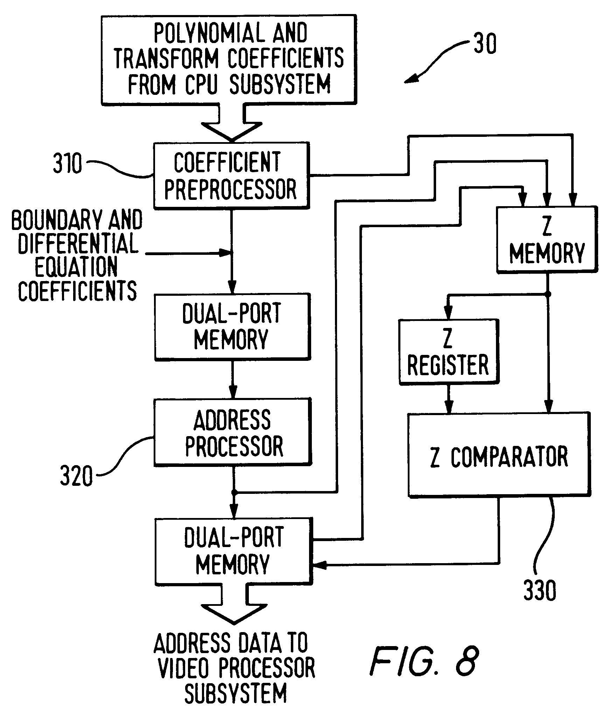

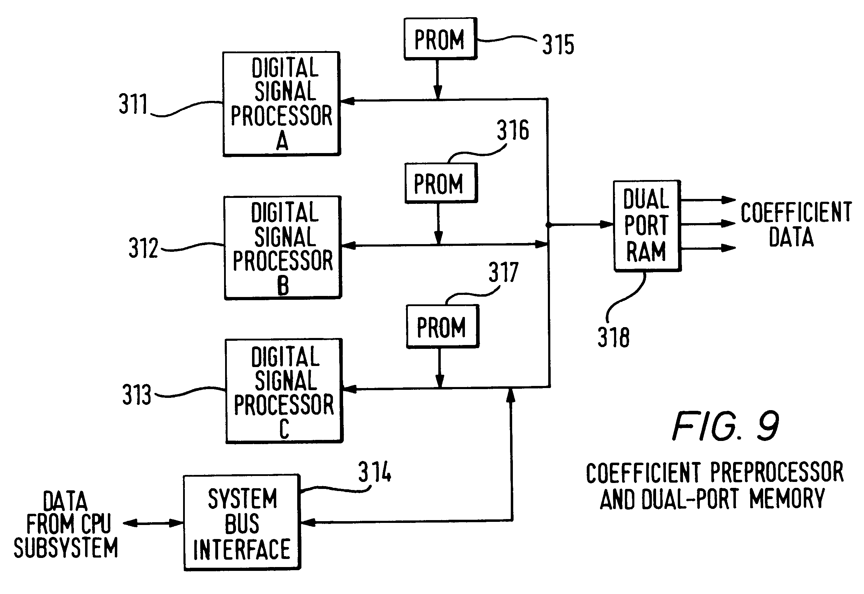

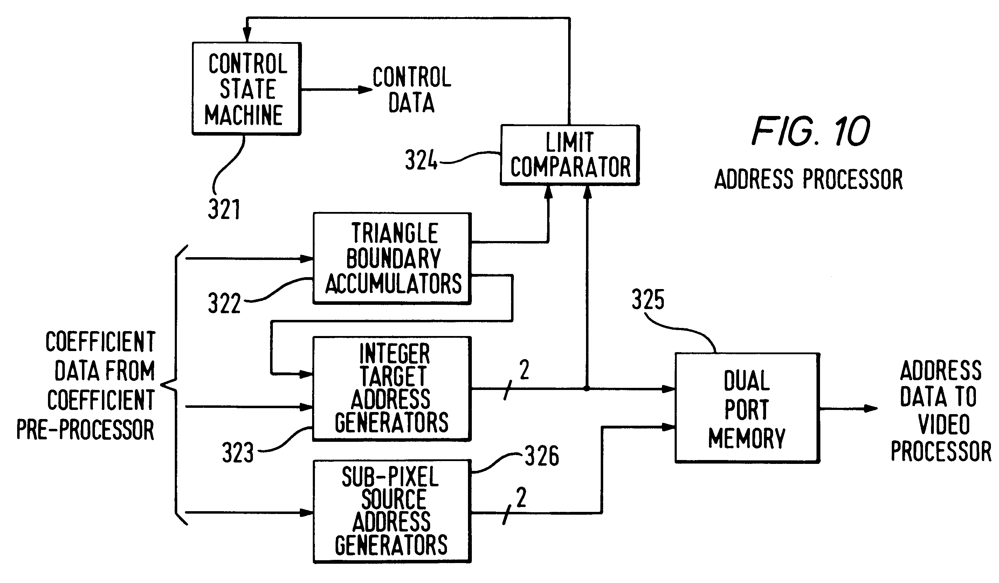

The address generator subsystem can be subdivided into three major functional blocks (see figure 8). These are the coefficient pre-processor 310, the address processor 320 and the z-comparator 330. The coefficient pre-processor and address preprocessors are shown in more detail, respectively in figures 9 and 10. Considering each of these functional blocks in turn.

The first functional block of the address generator subsystem is the coefficient pre-processor 310. The coefficient pre-processor receives polynomial and transform coefficients from the CPU subsystem during the vertical blanking interval of each video field. The polynomial coefficients define the shape of the surface to be created. The transform coefficients define other parameters of the warped image such as rotation, location and scale. It is important to note that while the bicubic polynomial equations are used to map the image onto a bicubic surface, other types of linear or nonlinear equations can also be used by the invention to map the image onto other types of 2D or 3D shapes.

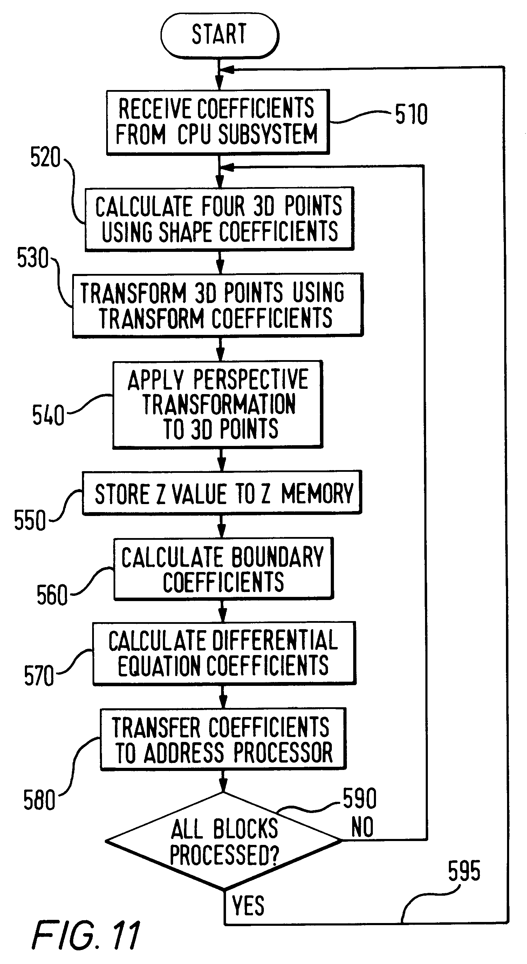

The coefficient pre-processor (see figure 11) uses the warp (or polynomial) coefficients and transform coefficients computed by the CPU to produce further coefficient sets which are then inputted into the address processor.

The flat 2D address space representing the pixel array which makes up the flat input image is divided into a number of small rectangular blocks. The blocks are 16 pixels long by 8 lines high. Although a block of this size is used in the preferred embodiment, block sizes in the range 4 x 4 pixels to 32 x 32 pixels may also be used. The smaller the block the more accurate the approximation to the 3D surface but the greater the processing required. The parametric equations are then evaluated at the four corners of each block to produce a 3D address in (x,y,z) co-ordinates on the curved surface which corresponds to the 2D source address in (u,v) co-ordinates. The 3D addresses are then transformed for rotation, location and scale by the transform coefficients from the CPU. A perspective transformation is also applied to the four 3D addresses to produce four 2D target addresses. The z (depth) values of the four 3D addresses are used in the perspective transformation process and are also saved in a z memory buffer for later use by the z comparator. The amount of perspective applied is determined by the user with a control panel adjustment. As the pixels of both source and target address maps are discrete elements, it is very unlikely that an integer pixel address in the source address map will map to an integer pixel address in the target address map. The four 2D target addresses for each input block corner are therefore likely to be subpixel output address space addresses.

The four corners of the original rectangular source block are, as discussed above, mapped to four 2D target addresses which, depending on the warp shape, form the four vertices of an irregularly shaped polygon. Each polygon is divided into two triangles. This is done by assigning the four polygon vertices to two sets of three vertices each. Each set of three vertices contains one unique vertex and two vertices which are common to both sets. The three vertices in each set can be considered the three vertices of a triangle which bounds a group of pixel addresses in the output address space. The irregular four sided polygons are divided into two triangles as it is considerably easier to perform boundary checking on the two triangles than the irregular polygon.

The 2D addresses of the three vertices of each triangle are then used to calculate a set of coefficients which define the boundaries of the triangle. The equation of each side of the triangle is easily determined from the 2D addresses of the triangle vertices.

The 2D addresses are also used to calculate two sets of first order partial differential equation coefficients which define the relationship between input address space addresses and warped output address space addresses within the local area bounded by the triangle.

The differential equations are of the form:

$$u = \frac{du}{dx} x + \frac{du}{dy} y + d$$

$$v = \frac{dv}{dx} x + \frac{dv}{dy} y + e$$

where d and e are constants.

The coefficients of the partial differential equations are calculated from the values of the points which form the vertices of the triangle. The specific points used depend on the orientation of the triangle within the output image, but the general form of the calculations are as follows:

$$\frac{du}{dx} = \frac{(u_1 - u_o)}{(x_1 - x_o)}$$

$$\frac{du}{dy} = \frac{(u_1 - u_o)}{(y_1 - y_o)}$$

$$\frac{dv}{dx} = \frac{(v_1 - v_o)}{(x_1 - x_o)}$$

$$\frac{dv}{dy} = \frac{(v_1 - v_o)}{(y_1 - y_o)}$$

where $(u_o, v_o)$ and $(u_1, v_1)$ are the integer source (i.e. source) address co-ordinates that map to the output address co-ordinates $(x_o, y_o)$ and $(x_1, y_1)$. As discussed above, $x_1$, $x_o$, $y_1$ and $y_o$ are most likely to be sub-pixel output address co-ordinates. Evaluating the partial differential equations for integer pixel target addresses within the triangle produces the sub-pixel u,v values that map to the integer pixel target addresses.

The calculated boundary and differential equation coefficients are stored in a buffer memory for use by the address processor. The addresses of the lower two vertices are discarded as they are not used by any later process. The address of the top vertex is stored as part of the boundary coefficients.

The process described above is completed for each of the rectangular blocks which make up the source address space. The coefficients generated for one field of blocks are stored in a memory buffer for retrieval and further processing by the address processor.

The coefficient pre-processor consists of one or more high speed digital signal processors with associated memory for program and data storage Referring now to figure 9 it can be seen that in the preferred embodiment illustrated there are three digital signal processors 311,312,313 and labelled Digital signal processor A, Digital signal processor B, and Digital signal processor C. The system bus interface 314 provides a means of communication between the signal processors and the CPU subsystem 20. The system bus 314 is typically a 16 bit slave device implemented using standard digital logic. The signal processors are high speed floating point processors which are implemented using Texas Instruments TMS320C31 processors. Each signal processor has an associated PROM memory 315,316,317. The various processing functions of the coefficient preprocessor are divided among the 3 DSP ICs to achieve the processing throughput required for real time operation. The operating programs for the DSPs are stored in the PROM memories. The coefficients produced by the DSPs as described are transferred to the address processor by a dual port RAM 318 ( also shown in figure 8). This RAM is typically implemented using static dual port RAM ICS which are well known in the art.

The operation of the coefficient preprocessor as described is summarised by figure 11 which shows the following steps: the coefficients are first received from the CPU subsystem at step 510. The four 3D points are then calculated at step 520 using the shape coefficients. At step 530 the 3D points are transformed using the calculated transform coefficients and at step 540 perspective transformation is applied to the 3D points. At step 550 the z values are stored in the z memory and at step 560 the boundary coefficients are calculated. At step 570 the differential equation coefficients are calculated and at step 580 the coefficients are transferred to the address processor. The procedure is then repeated from steps 520 to 580 until all blocks have been processed (step 590). The routine then returns to the beginning at step 595.

The address processor uses the boundary and partial differential equations' coefficients generated by the coefficient pre-processor to produce the sub-pixel source address space addresses which map to each of the integer pixel output addresses bounded by the triangle shaped output image areas described above.

Each output triangle is processed as follows. The triangle is scanned from top to bottom. For each point within the triangle, a pair of source and target addresses is simultaneously calculated.

The first address of the pair is the sub-pixel source address which is calculated using the first order partial differential equation coefficients from the coefficient pre-processor. The two partial differential equations are evaluated using the forward difference method where the forward difference of a function f(t) is:

$$\Delta f(t) = f(t + \delta) - f(t) \text{ where } \delta > 0$$

$$\text{or } f(t + \delta) = f(t) + \Delta f(t)$$

The advantage of the forward difference method is that it involves adding operations only. This is simple and the required processing power is therefore relatively low.

The values for (u,v) and (x,y) are known for the starting or top vertex of each triangle block (scanning from top to bottom), and f(t) (ie source addresses) (using notation of explanation given above of forward difference method) is therefore known for the starting target addresses. The lower and upper limits of each subsequent line of the triangle are calculated by using $\delta x$ and $\delta y$ values (ie $\Delta f(t)$) which are based on the slope of the lines which form the triangle boundaries. For example, if the left hand edge of the triangle (scanning left to right) has a slope of 4, a value of $4\frac{du}{dx}$ is sent as a coefficient from the coefficient pre-processor.
This

$$4\frac{du}{dx} + 1\frac{du}{dy}$$

would be added to the
boundary u value from the previous line to form the starting u value of a new line. The integer x value would also be increased by 4 to start the new line. The values for $f(t + \delta)$ can therefore be calculated for each integer pixel target address within the output triangle.

Consider a triangle being scanned from top to bottom and left to right; the first point scanned in any particular line is on the boundary of the triangle; the integer pixel source address (ie f(t)) and the corresponding sub-pixel target address are calculated; the separation (ie $\Delta f(t)$) of the sub-pixel target address from the next integer pixel target address on the same scanning line is then calculated; the sub-pixel source address corresponding to this integer pixel target address is then given by $f(t + \delta) = f(t) + \Delta f(t)$ ; the process is then repeated for the next integer pixel on the same scanning line and so on with the process being repeated for each scanning line.

The sub-pixel source address and integer pixel target address pairs generated by the above process are stored. As described above the sub-pixel source addresses are calculated using the forward difference method of solving the partial differential equations from the known values corresponding to the boundaries of the output triangles, and the integer pixel target addresses are calculated by simple accumulation.

For each point bounded by the triangle the pairs of sub-pixel source addresses and corresponding integer output space addresses are determined and stored. The addresses calculated by the address processor are stored in a memory using a read before write process which involves the z-comparator.

When calculating the sub-pixel source and integer target pairs for a particular output triangle, minimum and maximum boundary addresses of the target triangle are also calculated. These minimum and maximum boundary addresses limit the area of operation for the address processor to the area bounded by the triangle since the differential equations calculated for each triangle are only accurate within the bounds of the triangle from which they are derived.

The address processor consists of high speed digital logic which forms the arithmetic units necessary to calculate the address pairs and is shown in more detail in figure 10. The processor comprises a control state machine 321, triangle boundary accumulators 322, integer target address generators 323, a limit comparator 324 a further dual port memory 325 and a sub-pixel source address generator 326. The control state machine 321 is implemented using programmable logic and provides control for the other functional blocks within the address processor. The triangle boundary accumulators 322 receive coefficient data from the coefficient preprocessor and are used to calculate the triangle limits. The triangle boundary accumulators may be implemented using high speed CMOS adders and registers. The out put of the triangle boundary accumulators is fed to the limit comparator 324 which compares the triangle boundary limits to the integer target address values. The limit comparator may be implemented in programmable logic. The integer target address generators 323 also receive coefficient data from the coefficient preprocessor as well as boundary data output from the triangle boundary accumulators 322. The integer target address generators produce the integer target address points within the triangle being scanned. The output of the integer target address generators is also passed to the limit comparator 324 and then to the control state machine 321. The output of the integer target address generators is also passed to the dual port memory 325 the output of which provides address data to the video processor. The target address generators are implemented in programmable logic. The coefficient data from the coefficient preprocessor is also input to the sub pixel source address generators 326. These generators 326 simultaneously produce the sub-pixel source addresses which map to the integer target addresses as those target addresses are produced. The source address generators are implemented using arithmetic logic unit ICs from Cypress Semiconductor Inc.

The address outputs of the target address generator and source address generators are stored in the dual port memory 325 which may be implemented using 256K by 4 bit dynamic RAM ICS.

The purpose of the z comparator is to handle cases where the image is warped in such a way that different portions of the image overlap each other. As an example, consider a warp shape where the user has folded the 4 corners of the image toward the centre of the image such that all 4 corners overlap at different z depths. To provide for these cases in an efficient way, the z comparator makes multiple use of the z memory buffer that was first mentioned in the coefficient pre-processor described above. As described above, the coefficient pre-processor stores the z values for the upper vertex of each transformed block in the z memory buffer. The address at which each block z value is stored is formed by concatenating the horizontal and vertical block positions. For example, if the source address space was broken into 36 rows of blocks with 45 blocks on each row, the z memory address of the upper left corner block would be formed by concatenating zero for the vertical row number with zero for the horizontal position in the row. The lower right hand block of the address space would have a vertical row number of 36, and a horizontal position of 45. This method of forming the z memory address will allow the z comparator function to be very efficient.

The operator of z comparator is as follows.

When the address processor begins to process a new block, two of the coefficients retrieved from memory are integer numbers which together identify the 2D location of the upper vertex of the block in the output address space. This vertex location is in pixel co-ordinates. However, since the z values in the z memory are stored according to the block location it is necessary to determine which block contains the vertex in question. This is accomplished by dividing the horizontal vertex co-ordinate by the block width (in pixels), the vertical vertex co-ordinate by the block height (in lines), and concatenating the two results to form the z memory address. In the preferred embodiment of the invention, the block width and height are constants and are chosen to be powers of 2. This allows the divide to be performed as a truncation (shift) of the lower bits of the vertex horizontal and vertical co-ordinates. When the vertex co-ordinates are divided and concatenated they are used to look up the z value, for the block which is about to be processed from the z memory. This block z value is stored in a temporary register, which will be referred to as the z register, while the current block is being processed. As described in the address processor paragraphs, the address processor produces source addresses and writes the addresses to a memory. This write to memory is a read before write operation which also involves the z comparator. When the address processor is ready to perform a write operation to memory, it first reads the value which is already present in the desired memory location. A one bit flag in the memory location is checked to determine if this location has already been written during the present video field. If the location has not been previously written, the write operation proceeds immediately. However, if the location has already been written during the present field, this implies that the image overlaps itself at this location. To determine whether the new address data should over-write the existing data in memory, the z value for the existing data is looked up in the z memory and fed to one input of a comparator. The second input of the comparator is fed by the block z value (for the new data) which is stored in the z register. The address for the z memory look-up is created by dividing the address co-ordinates by the block width and height to determine the block address for the location under test. If the new data is closer to the viewpoint than the existing data (as determined by the comparator output) the new data over-writes the existing data. However, if the existing data is closer to the viewpoint, the new data is discarded and no write occurs.

The z comparator process is performed on all addresses generated by the address processor. The result of this process is an address map of the warped surface with hidden surfaces removed. The address map is then passed to the video processor where it is used to map the flat input image onto the desired warped output image.

The z comparator consists of a static ram z buffer memory, a z register, and a two input comparator implemented in programmable logic (the z values are 16 bit numbers in the preferred embodiment).

The video processor subsystem 40 receives a real time digital video input signal (which represents a video image) and performs the various video processing functions which are required to map the input video image onto the desired warp shape. The output of the video processor is a second real time digital video signal which contains the input image mapped onto the desired warped shape. The first process performed by the video processor is image filtering. The input image received by the video processor is filtered, as needed, by a 2 dimensional image filter. Without this filtering, aliasing artifacts would be produced when the image is resampled as it is mapped onto the warped shape. Coefficients for the 2D filters are controlled by the CPU subsystem and are a function of the scale factor of the warped image. Following the filtering process, the data that makes up the input video image is stored in a field or frame memory. To produce the warped output image, the video data in the frame memory is resampled using the address map from the address processor subsystem. This process maps the pixels in the flat source image to the proper positions in the warped output image. In most cases, a pixel in the warped output image will not map to an exact pixel location in the source image. Therefore, bilinear interpolation is used to produce an output pixel value which is based on the sub-pixel source address and the intensities of the surrounding pixels in the source memory. The output pixels produced by the interpolators form a digital video signal which is a video representation of the flat input image mapped onto the warped surface defined by the user.

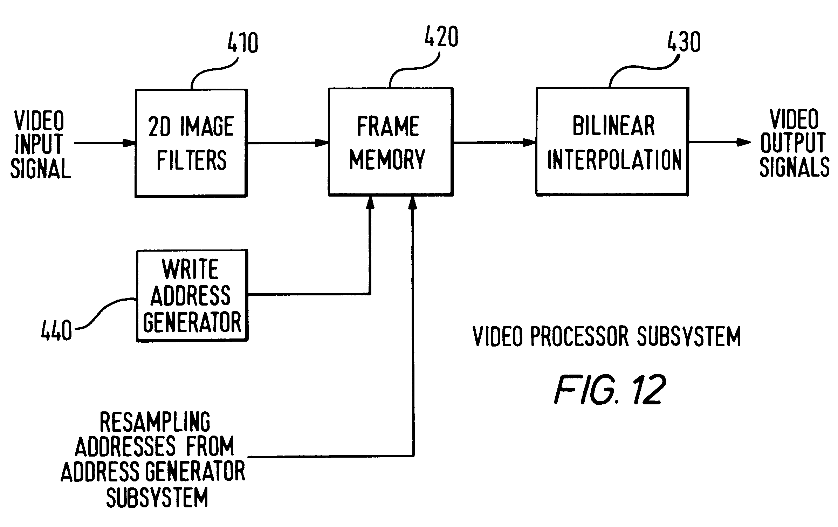

The video processor is illustrated in more detail in figure 12 and consists of hardware based 2D image filters 410, a random access memory frame buffer 420 and 2D bilinear interpolation function hardware 430. The 2D image filters 410 receive the input video signal and provide low pass filtering to reduce the amount of aliasing in the resampled image. The filters are implemented using digital multipliers and adders which form a standard finite impulse response (FIR) image filter. The output from the image filters 410 is stored in the frame memory 420 under the control of a write address generator 440. The write address generator is implemented using programmable logic circuits and the frame memory 420 in static RAM. The outputs from the address generator subsystem are used to resample the image which is stored in the frame memory 420 Since most pixels in the output image do not map to integer points in the source image, the output pixels are interpolated from the surrounding integer pixels which are stored in the frame memory. Bilinear interpolation is used for this process as is well known. The interpolation is performed by interpolator 430 which receives the output from the memory 420. The interpolator is realised using an ASIC (application specific integrated circuit which contains multipliers and adders. The output of the interpolator 430 is the final surface mapped output video image.

The embodiment described may be modified and those skilled in the art will understand that the hardware described is a matter of choice. Many of the components described and the functions they perform can be implemented in a variety of other ways, either in hardware or in software all of which are within the scope of the invention.

**Claims**

1. Apparatus for generating three dimensional video effects in which an input video signal representative of an input image is manipulated to produce an output video signal representative of the input image mapped onto a three dimensional surface, comprising:

    means for defining the three dimensional surface;

    means for dividing the address map defining the input video signal into a plurality of blocks and for transforming the vertices of each block in accordance with the defined surface to provide a series of target blocks;

    means for defining and storing the relationship between pixel points in each target block and the input signal address map;

    means for scanning each pixel of each target block and generating a corresponding source address;

    means for mapping said input image onto said defined three dimensional surface.

2. Apparatus according to claim 1, further comprising:

    means for interpolating between input image pixels for each source address.

3. Apparatus according to claim 1 wherein the three dimensional surface is defined by the user of the system.

4. Apparatus according to claim 3 wherein the user defines the three dimensional surface by specifying the co-ordinates of a number of control points on the three dimensional surface.

5. Apparatus according to claim 1 wherein the three dimensional surface is defined by parametric bicubic equations.

6. Apparatus according to claim 5 wherein the vertices of each block in the source address map are transformed using the parametric bicubic equations.

7. Apparatus according to claim 1 wherein the target blocks are triangles.

8. Apparatus according to claim 1, wherein the means for defining and storing the relationship between pixel points on each target block and the input signal address map comprises:

    means for generating boundary coefficients defining the boundaries of each of said target blocks;

    means for generating for each target block a set of equations defining the relationship between target points contained within the block and the input signal address map; and

    means for storing the coefficients defining the boundaries of each target block and the equations defining the relationship between target points contained within the block and the input signal address map.

9. Apparatus according to claim 8 wherein the equations defining the relationship between the target points and the input signal address map are partial differential equations of the form

$$u = \frac{du}{dx} x + \frac{du}{dy} y + d$$

$$v = \frac{dv}{dx} x + \frac{dv}{dy} y + e$$

    where (u,v) are the co-ordinates of a point in the input signal address map, (x,y) are the co-ordinates of a point in the target address map, and d and e are constants.

10. Apparatus according to claim 9 wherein the partial differential equations are solved to determine values of (u,v) for values of (x,y) using the forward difference method of solution of partial differential equations together with the boundary coefficients.

11. A video special effects system for manipulating an input video signal representative of an input image to produce an output video signal representative of the input image mapped onto a three dimensional surface, said system comprising:

    means for generating a first set of transformation equations which map said input image onto said three dimensional surface;

    means for dividing the source address map of said input image into a plurality of source blocks each having at least three vertices;

means for transforming the said source vertices of each block using said first set of transformation equations to create a plurality of target blocks;

means for generating boundary coefficients defining the boundaries of each of said target blocks;

means for generating for each target block a second set of equations defining the relationship between target points contained within the block and the source address map;

memory means for storing the coefficients defining the boundaries of each target block and the equations defining the relationship between target points within a particular block and the source address map;

means for using the stored boundary coefficients and second sets of equation coefficients to calculate pairs of source address map addresses and corresponding output address map addresses for all points within the boundaries of the target block; and

means for mapping said input image into an output image by mapping points on the input image from onto the target address map using the pairs of corresponding source and target points.

12. Apparatus for generating three dimensional video effects in which an input video signal representative of an input image is manipulated to produce an output video signal representative of the input image mapped onto a three dimensional surface, including:

means controllable by a user of the apparatus to define the co-ordinates of control points located on the three dimensional surface; and

means for generating said three dimensional surface from the co-ordinates of said control points.

13. Apparatus according to claim 12 further including:

means for generating parametric bicubic equations which define a surface including said control points.

14. Apparatus for generating three dimensional video effects in which an input video signal representative of the input image mapped onto a three dimensional surface, comprising:

means for generating pairs of input signal address map addresses and corresponding output signal address map addresses;

first memory means for storing said generated pairs of input and output addresses;

second memory means for storing the depth co-ordinate of processed points on the three dimensional surface given by addresses in said output address map;

third memory means for temporarily storing the depth co-ordinates of points of the output address map as they are processed;

means for reading said first memory means as each pair of addresses is generated to determine whether an output address has already been written into said first memory means at the same location in the output address space;

comparison means for comparing the values of the depth co-ordinates stored in said second and third memory means when an output address has already been written into said first memory means at the same location in the output address space; and

means for over-writing the depth co-ordinate in said second memory means with the depth co-ordinate in said third memory means if the depth co-ordinate of the point of the output address map currently being processed is such that the point currently being processed is closer to the apparatus viewpoint that the point previously processed and stored in said first memory means.

15. Apparatus according to claim 14 wherein said second memory means comprises a static ram z buffer memory, said third memory means comprises a z register and said comparison means comprises a two input comparator in programmable logic.

(x,y,z)     (x,y..)

X          X          X          X

1          2          3          4

(x,y..)

X          X          X          X

4          5          6          7

X          X          X          X

8          9          10         11

X          X          X          X

12        13        14        15

## FIG. 1

              (x,y..)

              X          X          X

    (x,y,z)  2          3          4

         X

(x,y..)    1

X          X          X          X

4          5          6          7

X          X          X          X

8          9          10         11

X          X          X          X

12        13        14        15

## FIG. 2

FIG. 3

# FIG. 4

START — 100

READ USER
INPUT CONTROLS

110

NEW INPUT? — NO

120 — YES

130

FORMAT SHAPE AND
TRANSFORM DATA

140

150

TRANSMIT DATA TO
CPU SUBSYSTEM

160

*FIG. 5*

## FIG. 6
### CONTROL PANEL SUBSYSTEM

```
                              ┌──────────────┐
                              │  FLAT-PANEL  │
                              │  GRAPHICAL   │─── 180
                              │   DISPLAY    │
                              └──────────────┘
                                     ▲
                                     │
USER INPUT BY      ┌──────────────┐  │   ┌──────────────┐      ┌──────────────┐
OPERATION OF ───── │ USER CONTROLS │──┴── │   CONTROL    │◄────►│    SERIAL    │──► DATA TO CPU
USER CONTROLS      │(BUTTONS,ROTARY│      │MICROPROCESSOR│      │COMMUNICATION │    SUBSYSTEM
                   │ KNOBS ETC.)   │      └──────────────┘      │    PORT      │
                   └──────────────┘                            └──────────────┘
                          └─ 175            └─ 170                     └─ 185
```

EP 0 707 420 A1

FIG. 7
CPU SUBSYSTEM

EP 0 707 420 A1

*FIG. 8*

*FIG. 9*

COEFFICIENT PREPROCESSOR
AND DUAL-PORT MEMORY

EP 0 707 420 A1

FIG. 10

ADDRESS PROCESSOR

EP 0 707 420 A1

FIG. 11

VIDEO PROCESSOR SUBSYSTEM

*FIG. 12*

EP 0 707 420 A1

European Patent
Office

**EUROPEAN SEARCH REPORT**

Application Number

EP 95 30 6533

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 449 478 (MICROTIME INC.)<br><br>* column 2, line 1 - column 8, line 18 * | 1-3,5,6,<br>8,11 | H04N5/262 |
| Y<br>A | | 13<br>12,14 | |
| X | EP-A-0 574 111 (SONY U.K. LIMITED)<br><br>* column 2, line 1 - column 3, line 22 *<br>* column 5, line 27 - column 6, line 55 *<br>* column 11, line 2 - line 47 * | 1-4,12,<br>14 | |
| Y<br>A | | 13<br>11 | |
| X | EP-A-0 280 316 (SONY CORPORATION)<br><br>* column 2, line 4 - column 4, line 2 *<br>* column 5, line 24 - column 6, line 1 *<br>* column 6, line 40 - column 8, line 38 * | 1-3,7,8,<br>11 | |
| X | SMPTE JOURNAL,<br>vol. 100, no. 3, March 1991 WHITE PLAINS,<br>NY, US,<br>pages 162-166,<br>VIGNEAUX ET AL. 'A real-time video<br>mapping and manipulation system'<br>* the whole document * | 1,3,7 | TECHNICAL FIELDS<br>SEARCHED    (Int.Cl.6)<br><br>H04N |
| A | | 4,11,12,<br>14 | |
| A | FERNSEH- UND KINO-TECHNIK,<br>vol. 46, no. 7/8, July 1992 HEIDELBERG,<br>DE,<br>pages 487-496,<br>K.D. RUELBERG 'Adressgenerierung in<br>digitalen Video-Effektgeräten'<br>* the whole document * | 1-4,11,<br>12,14 | |

-/--

The present search report has been drawn up for all claims

| Place of search | Date of completion of the search | Examiner |
|---|---|---|
| THE HAGUE | 19 December 1995 | De Dieuleveult, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**European Patent Office**

# EUROPEAN SEARCH REPORT

Application Number

EP 95 30 6533

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO-A-90 03703 (QUESTECH LIMITED)<br><br>* the whole document *<br>--- | 1-4,11,<br>12,14 | |
| A | US-A-5 175 808 (SAYRE)<br><br>* column 1, line 10 - line 24 *<br>* column 6, line 50 - column 7, line 36 *<br>--- | 3-6,12,<br>13 | |
| A | IBM TECHNICAL DISCLOSURE BULLETIN,<br>vol. 23, no. 9, February 1981 US,<br>pages 3996-4005,<br>S. BOINODIRIS 'Computer graphics using multi-echelon processing structures'<br>* page 3998, line 28 - line 48 *<br>* page 4000, line 40 - page 4001, line 48 *<br>--- | 5,13-15 | |
| A | EP-A-0 506 429 (THE GRASS VALLEY GROUP, INC.)<br>* page 14, line 15 - page 15, line 40 *<br>----- | 14,15 | **TECHNICAL FIELDS SEARCHED** (Int.Cl.6) |

The present search report has been drawn up for all claims

| Place of search | Date of completion of the search | Examiner |
|---|---|---|
| THE HAGUE | 19 December 1995 | De Dieuleveult, A |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)